# EUROPÄISCHE PATENTSCHRIFT

(11) **EP 0 561 323 B1**
(45) Veröffentlichungstag und Bekanntmachung des Hinweises auf die Patenterteilung: **11.09.1996**
(21) Anmeldenummer: 93104173.5
(22) Anmeldetag: 15.03.1993
(51) Int. Cl.: B60J 1/18

(54) **Anordnung zur Befestigung eines flexiblen Fensters in einem flexiblen Verdeck**
Fixing arrangement for a flexible window onto a soft top
Agencement pour la fixation d'une fenêtre flexible dans un toit souple

(30) Priorität: 18.03.1992 DE 9203530 U
(43) Veröffentlichungstag der Anmeldung: 22.09.1993
(73) Patentinhaber: MEHLER VARIO SYSTEM GmbH, D-36043 Fulda (DE)
(72) Erfinder: Stolz, Josef, W-6400 Fulda (DE)
(74) Vertreter: Fuchs, Luderschmidt & Partner Patentanwälte

(56) Entgegenhaltungen:
- EP-A- 0 345 799
- DE-A- 3 841 035
- US-A- 2 637 086

## Beschreibung

Die Erfindung betrifft eine Anordnung zur Befestigung eines flexiblen Fensters in einem flexiblen Verdeck, insbesondere im flexiblen Klappverdeck eines Fahrzeugs, die nach der DE-A-3 841 035 gattungsgemäß ausgebildet ist.

Cabrioletverdecks müssen wie die Verdecks bzw. Dächer anderer Kraftfahrzeuge mit einer Heckscheibe versehen sein, die dem Fahrer den Ausblick nach hinten gestattet. Da Cabrioletverdecks bei offenem Fahrzeug im allgemeinen nach hinten zusammengefaltet werden, müssen auch die Heckfenster aus einem faltbaren, flexiblen Material gefertigt sein. Hierfür kommen transparente Kunststoffpolymerisate in Frage. Üblicherweise werden die Außenbespannungen solcher Klappverdecke mit dem Heckfenster an dessen Umfangsbereich verklebt, vernäht oder vernietet.

Dabei ist von entscheidendem Nachteil, daß das Heckfenster bereits vor dem Aufmontieren des Verdecks in die Außenbespannung eingearbeitet werden muß. Beim Aufmontieren des Verdecks selbst kann dabei das Heckfenster verformt oder zerkratzt werden. Außerdem sind derartige Verbindungen nicht ausreichend gegen Lufteinflüsse und Feuchtigkeit gesichert. Das flexible Fenstermaterial hat nur eine beschränkte Standfestigkeit und kann derart verkratzen, daß der Ausblick durch das Fenstermaterial hindurch beeinträchtigt wird, es kann bei niedrigen Umgebungstemperaturen steif werden und zu Brüchen neigen und kann aber auch durch ständige UV-Einstrahlung verspröden, so daß vorzeitig beim Falten des Klappverdecks Bruchstellen und Risse auftreten.

Diese Schäden führen dazu, daß Heckscheiben von Cabrioletverdecks oft vorzeitig ausgetauscht werden müssen. Dies ist mit einem erheblichen Aufwand verbunden. Im allgmeinen muß das gesamte Verdeck ausgebaut, die alte Scheibe herausgetrennt, eine neue eingenäht, eingeklebt oder eingeschweißt werden, worauf das Verdeck wieder am Fahrzeug montiert werden muß.

In der DE-A-38 41 035 ist eine Anordnung zur Fensterbefestigung in einem flexiblen Verdeck beschrieben, mit welcher das vorerwähnte Problem gelöst wird. Hierfür ist die Scheibe mit dem Verdeck mit einem umlaufenden Reißverschluß verbindbar. Dieser Reißverschluß hat jedoch in diesem Falle nur eine tragende Funktion. Zur Abdichtung der Verbindung weisen die Fensterscheibe sowie die Verdeckbespannung entlang ihrer Umfangskanten den Reißverschluß überdeckende und sich gegenseitig überlappende Umfangsstreifen auf. Im Überlappungsbereich sind die Umfangsstreifen mittels einer abdichtenden und lösbaren Klebeverbindung miteinander verbunden. Diese Klebeverbindung ist durch einen Schmelzkleber hergestellt, der durch Wärmeentwicklung aktivierbar ist. Hierzu ist vorgeschlagen worden, einen elektrischen Widerstandsheizleiter in den Bereich der Klebeverbindung einzulassen, der von außen her im Bedarfsfalle mit einer Spannungsquelle verbunden wird, so daß die aufgrund eines Stromflusses durch ihn erzeugte Wärme den Schmelzkleber aktiviert, so daß die alte Fensterscheibe ersetzt werden kann durch eine neue.

Die beschriebene Anordnung eignet sich für den Austausch von Fensterscheiben im professionellen Bereich, also beispielsweise in Werkstätten. Die Handhabung allerdings ist relativ kompliziert, da eine neue Fensterscheibe nur unter Anwendung eines Spannrahmens mit dem Verdeck verklebt werden kann. Dieser Spannrahmen sorgt für eine Flächenpressung zwischen der Fensterscheibenkante und dem Verdeck bzw. zwischen den sich überlappenden Umfangsstreifen. Die Handhabung beim Austausch einer Fensterscheibe ist darüber hinaus relativ langwierig. So muß für den Austausch eine Zeitdauer von etwa 30 Minuten angesetzt werden.

Als wünschenswert hat sich daneben herausgestellt, insbesondere bei Fahrzeugen, die in sonnenreichen Gegenden gefahren werden, eine Fensterscheibe trotz aufgespannten Verdecks abzuklappen, um einerseits noch einen Sonnenschutz durch das Verdeck, andererseits aber eine ausreichende Belüftung des Fahrzeuginnenraums zu erhalten. Hierfür bietet die Anordnung gemäß der genannten DE-A1 keine Möglichkeit.

Vor dem aufgezeigten Hintergrund ist es nun die Aufgabe der vorliegenden Erfindung, eine Anordnung zur Befestigung eines flexiblen Fensters in einem flexiblen Verdeck anzugeben, die einerseits einen raschen Ausbau der Fensterscheibe, beispielsweise im Falle einer notwendig werdenden Reparatur, und andererseits ein einfaches Abklappen zu Belüftungszwecken ermöglicht.

Gelöst wird die Aufgabe durch die Anordnung gemäß dem Anspruch 1. Weitere vorteilhafte Ausgestaltungen ergeben sich aus den Unteransprüchen.

Wie in Anspruch 1 angegeben, sind bei der Anordnung die Umfangskanten der Fensterscheibe und die Umfangskanten der Fensteröffnung im Verdeck jeweils mit dem einen Teil eines teilbaren, umlaufenden und wasserdichten Schnellverschlusses versehen, mit dessen Hilfe die Fensterscheibe in dem Verdeck fixierbar ist. Bei dem wasserdichten Schnellverschluß handelt es sich vorzugsweise um einen wasserdichten Reißverschluß, dessen Teile die erwähnten Umfangskanten vollständig umlaufen, oder aber um eine umlaufende Klemmkeder aus geeignetem wasserdichtem Material. Diese kann zum Inneren des Fahrzeugraumes zur Erhöhung der Stabilität mit einem Reißverschluß überbrückt sein, wobei Teile des teilbaren Reißverschlusses jeweils an der Klemmkeder befestigt, beispielsweise geklebt sind. Zwar ist aus der US-A-2 637 086 ein wasserdichter Reißverschluß bekannt geworden. Dieser Reißverschluß ist jedoch aufgrund seiner Dimension nicht zur Verwendung auf dem Gebiet der Erfindung geeignet. Auch läßt sich ein Rundumlauf des Reißverschlusses aufgrund der Steifigkeit nicht ohne weiteres realisieren.

Die erfindungsgemäße Anordnung gestattet zum einen den mühelosen Ausbau der Fensterscheibe und gegebenenfalls den Austausch derselben. Er kann innerhalb weniger Minuten ausgeführt werden, und zwar auch von dem Laien. Darüber hinaus kann der Schnellverschluß so betätigt werden, daß die Fensterscheibe an ihrer Basiskante weiterhin mit dem Verdeck verbunden bleibt, wohingegen die übrigen Bereiche gelöst werden, so daß die Fensterscheibe zu Belüftungszwecken einfach abgeklappt werden kann.

Vorzugsweise ist vorgesehen, daß sowohl die Fensterscheibe als auch das Verdeck im Bereich seiner Fensteröffnung an ihren dem Schnellverschluß abgewandten Seiten mit textilen Umfangsstreifen versehen sind, die bei eingesetzter Fensterscheibe diese überdeckend auf Stoß aneinander, wenn der Schnellverschluß als Reißverschluß ausgebildet ist, anliegen. Die Wirkung dieser Maßnahme ist in erster Linie die saubere ästhetische Wirkung der Verbindung zwischen der Fensterscheibe und dem Verdeck. Darüber hinaus wird aber auch der wasserdichte Reißverschluß vor äußeren Einflüssen, wie beispielsweise Staub, wirksam geschützt. Wenn der Schnellverschluß als Klemmkeder ausgebildet ist, bedarf es dieser Maßnahme nicht. Hierbei wird bevorzugt, daß die flexiblen Umfangsstreifen annähernd bündig mit den Teilen der Klemmkeder abschließen.

Bevorzugt ist der Umfangsstreifen des Verdecks für alle Ausbildungen des Schnellverschlusses (Reißverschluß, Klemmkeder) einstückig aus demselben flexiblen Material wie die Verdeckbespannung gefertigt, und zwar durch Falzung des Verdeckmaterials. Dies ergibt eine nahtlosen Übergang im Bereich der Fensteröffnung des Verdecks und der Umfangskante und somit einen äußerst ansprechenden ästhetischen Effekt.

Bevorzugt ist die Verbindung zwischen den Teilen des Schnellverschlusses sowie zwischen den Umfangsstreifen und der Fensterscheibe bzw. dem Verdeck durch ein mit Hochfrequenz verschweißbares Polyamid oder Polyesther hergestellt. Dies ist insbesondere von Vorteil, weil das Polyamid bzw. Polyesther nicht nur eine verbindende, sondern auch eine abdichtende Funktion ausübt. So wird ein Unterkriechen der Verbindung zwischen den Teilen des beispielsweise Reißverschlusses und den Umfangskanten durch Wasser wirksam verhindert.

Gemäß einer weiteren Ausführungsform sind die gefalzten Lagen des Umfangsstreifen des Verdecks ebenfalls mittels mit Hochfrequenz verschweißbarem Polyamid oder Polyesther fixiert, so daß die Umfangskante zwar noch flexibel ist, aber andererseits auch eine hinreichende Stabilität für die an ihr angreifenden Kräfte nach dem Einsetzen der Scheibe in das Verdeck bietet. Denkbar ist aber auch die Verwendung eines Latexklebers.

Schließlich kann vorgesehen sein, daß der Umfangsstreifen an der Fensterscheibe aus einem doppelt gefalzten Textilband gebildet ist, wobei die Falzungen mittels durch Hochfrequenz verschweißbarem Polyamid oder Polyesther fixiert sind. Es kann aber auch Latexkleber verwendet werden. Vorzugsweise besteht dieses Textilband aus demselben Material wie die Verdeckbespannung. Die doppelte Falzung ergibt eine Höhe, die in etwa jener entspricht, die durch die Falzung des Verdeckmaterials im Bereich der Fensteröffnung zur Herstellung des Umfangsstreifens entsteht, so daß sich insgesamt ein fast bündiger Abschluß der Verdeckbespannung mit dem Umfangsstreifen auf der Fensterscheibe ergibt.

Die Erfindung wird anhand zweier Ausführungsbeispiele gemäß der Zeichnungsfiguren näher erläutert. Hierbei zeigt:
- Fig. 1: eine erste Ausführungsform der Anordnung im schematischen Schnitt, und
- Fig. 2: eine zweite Ausführungsform im schematischen Schnitt

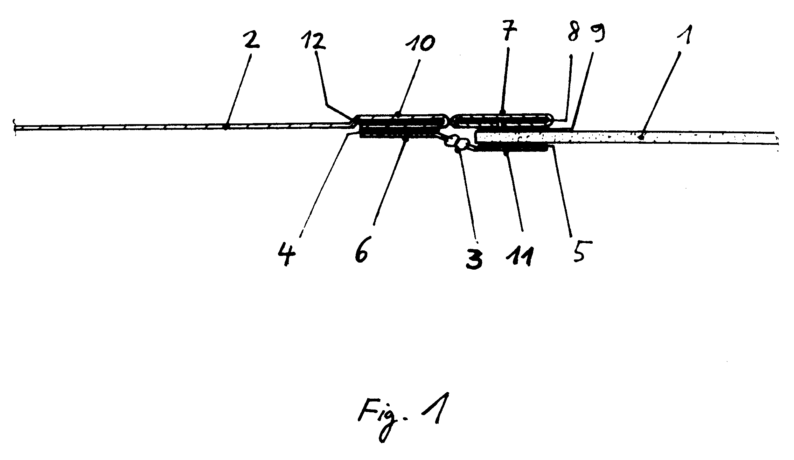

In der Figur 1 ist das Verdeck 2, mit dem in dessen Fensteröffnung die Fensterscheibe 1 verbunden ist, dargestellt. Das Verdeck 2 besteht aus einem flexiblen Textilmaterial, die Fensterscheibe 1 aus einem transparenten Kunststoffpolymerisat. An der Umfangskante der Fensterscheibe 1 ist auf ihrer zum Inneren des beispielsweise Fahrzeugs weisenden Seite ein Teil 11 und an der Umfangskante des Verdecks ebenfalls zum Inneren des beispielsweise Fahrzeugs weisend ein Teil 6 eines teilbaren Schnellverschlusses 3 angebracht, der vorliegend als Reißverschluß skizziert ist. Der Verschluß 3 läuft um die gesamte Fensterscheibe sowie um die gesamte Fensteröffnung im Verdeck 2. Seine Teile 11 und 6 sind an die Fensterscheibe 1 bzw. an das Verdeck 2 jeweils durch eine Schicht aus mit Hochfrequenz verschweißbarem Polyamid oder Polyesther 5 bzw. 4 angebracht.

Auf der anderen Seite der Fensterscheibe ist der Umfangsstreifen 7 angebracht, und zwar ebenfalls mittels einer Schicht 9 aus mit Hochfrequenz verschweißbarem Polyamid oder Polyesther. Der Umfangsstreifen 7 ist vorliegend gebildet aus einem doppelt gefalzten Textilband, wobei die Falzungen durch eine Schicht 8 aus durch Hochfrequenz verschweißbarem Polyamid oder Polyesther fixiert sind. Auf seiten des Verdecks 2 ist der Umfangsstreifen 10 gebildet aus dem flexiblen Verdeckmaterial durch eine Falzung desselben, die durch eine Schicht 12 aus mit Hochfrequenz verschweißbarem Polyamid oder Polyesther fixiert ist. Die Schichten 8 und 12 können auch aus Latexkleber bestehen. Die Umfangsstreifen 7 und 10 sind so dimensioniert, daß sie bei eingesetzter Fensterscheibe 1 den Schnellverschluß 3 überdecken und auf Stoß aneinander anliegen. Hierdurch wird nicht nur eine ansprechende ästhetische Wirkung der gesamten Anordnung, sondern auch ein Schutz vor Umwelteinflüssen wie beispielsweise durch Staub auf dem Reißverschluß bewirkt.

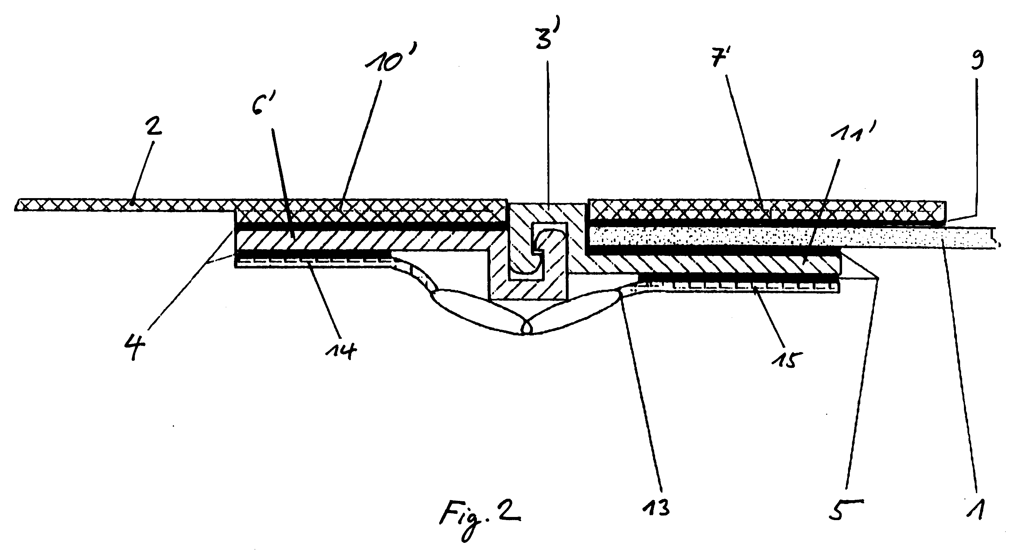

Figur 2 zeigt eine zweite bevorzugte Ausführungsform der Anordnung im schematischen Schnitt. Gleiche bzw. entsprechende Teile zu jenen in der Anordnung gemäß Fig. 1 sind mit den gleichen Bezugszeichen versehen. Im Unterschied zur oben beschriebenen Ausführungsform ist der Schnellverschluß 3' hier als Klemmkeder ausgeführt. Die Klemmkeder hat von sich aus den Vorzug, daß sie wasserdicht ist, also keine besonderen Anforderungen an dieses Verbindungselemente gestellt werden muß. Zusätzlich hin zum Inneren des Verdecks ist hier ein die Klemmkeder 3' überbrückender Reißverschluß 13 vorgesehen, der, da bereits die Klemmkeder 3' wasserdicht ist, nicht wasserdicht zu sein braucht. Seine Teile 14 und 15 sind mittels einer Klebschicht 4 bzw. 5 an die Teile der Klemmkeder angeklebt. Die Umfangsstreifen 7' und 10' schließen vorliegend bündig mit den Teilen der Klemmkeder 3' ab. Hierdurch ergibt sich ein angenehmes ästhetisches Bild der erfindungsgemäßen Anordnung.

## Patentansprüche

1. Anordnung zum Befestigen eines flexiblen Fensters in einem flexiblen Verdeck (2), insbesondere im flexiblen Klappverdeck eines Fahrzeugs, bei der die Umfangskante der Fensterscheibe (1) und die Umfangskante der Fensteröffnung im Verdeck (2) jeweils mit dem einen Teil (6, 11) eines teilbaren, umlaufenden Schnellverschlusses (3) versehen sind, mit dessen Hilfe die Fensterscheibe (1) in dem Verdeck (2) fixierbar ist, dadurch gekennzeichnet, daß der Schnellverschluß (3) zur Abdichtung der Verbindung zwischen den obengenannten Umfangskanten wasserdicht ist.

2. Anordnung nach Anspruch 1, bei der der Schnellverschluß (3) gebildet ist aus einer Klemmkeder (3')

3. Anordnung nach Anspruch 2, bei der die Klemmkeder überbrückbar ist auf der dem Inneren des Verdecks zugewandten Seite mittels eines teilbaren und umlaufenden Reißverschlusses (13), dessen Teile (14, 15) an den Klemmkederteilen (6', 11') befestigt sind.

4. Anordnung nach Anspruch 2 oder 3, bei der sowohl die Fensterscheibe (1) als auch das Verdeck (2) im Bereich seiner Fensteröffnung an ihren der Klemmkeder (3') abgewandten Seiten mit textilen Umfangsstreifen (7', 10') versehen sind, die annähernd bündig mit den Teilen der Klemmkeder (3') abschließen.

5. Anordnung nach Anspruch 1, bei der sowohl die Fensterscheibe (1) als auch das Verdeck (2) im Bereich seiner Fensteröffnung an ihren dem als wasserdichten Reißverschluß ausgebildeten Schnellverschluß (3) abgewandten Seiten mit textilen Umfangsstreifen (7, 10) versehen sind, die bei eingesetzter Fensterscheibe (1) diese überdeckend auf Stoß aneinander anliegen.

6. Anordnung nach Anspruch 4 oder 5, bei der der Umfangsstreifen (10, 10') des Verdecks (1) einstückig aus dem flexiblen Verdeckmaterial durch Falzung desselben gebildet ist.

7. Anordnung nach Anspruch 4 oder 5, bei der die Verbindung zwischen den Teilen des Schnellverschlusses (3) sowie zwischen den Umfangsstreifen (7, 10) und der Fensterscheibe (1) bzw. dem Verdeck (2) durch ein durch Hochfrequenz verschweißbares Polyamid oder Polyesther hergestellt ist.

8. Anordnung nach Anspruch 6, bei der die gefalzten Lagen des Umfangsstreifen (10, 10') mittels durch Hochfrequenz verschweißbarem Polyamid oder Polyesther fixiert sind.

9. Anordnung nach Anspruch 4 oder 5, bei der der Umfangsstreifen (7, 7') an der Fensterscheibe (1) gebildet ist aus einem doppelt gefalzten Textilband, wobei die Falzungen mittels durch Hochfrequenz verschweißbarem Polyamid oder Polyesther fixiert sind.

## Claims

1. Arrangement for attaching a flexible window in a flexible hood (2), in particular in the flexible collapsible hood of a vehicle, in which the peripheral edge of the window pane (1) and the peripheral edge of the window opening in the hood (2) are provided in each case with one part (6, 11) of a separable, circular rapid closure (3), with the aid of which window pane (1) can be fixed in the hood (2), characterised in that the rapid closure (3) is water-tight to seal the connection between the above-mentioned peripheral edges.

2. Arrangement according to claim 1, in which the rapid closure (3) is formed from a clip weatherstrip (3').

3. Arrangement according to claim 2, in which the clip weatherstrip can be bridged on the side facing the interior of the hood by means of a separable and circular zip fastener (13), the parts (14, 15) of which are attached to the clip weatherstrip parts (6', 11').

4. Arrangement according to claim 2 or 3, in which both the window pane (1) and the hood (2) are provided with textile peripheral strips (7', 10'), which seal approximately flush with the parts of the clip weatherstrip (3'), in the region of its window opening on their sides facing away from the clip weatherstrip (3').

5. Arrangement according to claim 1, in which both the window pane (1) and the hood (2) are provided with textile peripheral strips (7, 10), which rest abutting against one another covering the window pane (1) when the latter is inserted, in the region of its window opening on their sides facing away from the rapid closure (3) designed as a water-tight zip fastener.

6. Arrangement according to claim 4 or 5, in which the peripheral strip (10, 10') of the hood (2) is formed integrally from the flexible hood material by folding the same.

7. Arrangement according to claim 4 or 5, in which the connection between the parts of the rapid closure (3) and between the peripheral strips (7, 10) and the window pane (1) or the hood (2) is produced by a polyamide or polyester which can be heat-sealed using high frequency.

8. Arrangement according to claim 6, in which the folded layers of the peripheral strip (10, 10') are fixed by means of polyamide or polyester which can be heat-sealed using high frequency.

9. Arrangement according to claim 4 or 5, in which the peripheral strip (7, 7') on the window pane (1) is formed from a doubly folded textile tape, wherein the folds can be fixed by means of polyamide or polyester which can be heat-sealed using high frequency.

## Revendications

1. Agencement pour la fixation d'une fenêtre flexible dans une capote flexible (2), en particulier dans le toit décapotable d'un véhicule, dans lequel le pourtour de la lunette arrière (1) et le pourtour de l'ouverture destinée à la vitre dans la capote (2) sont pourvus respectivement d'une partie (6, 11) d'une fermeture rapide (3) montée en périphérie, séparable, à l'aide de laquelle la lunette arrière (1) peut être fixée dans la capote (2), caractérisé en ce que la fermeture rapide (3) est imperméable pour rendre étanche la liaison entre les pourtours cités plus haut.

2. Agencement selon la revendication 1, dans lequel la fermeture rapide (3) est façonnée en un cadre de serrage (3').

3. Agencement selon la revendication 2, dans lequel le cadre de serrage peut être surmonté sur le côté tourné vers l'intérieur de la capote d'une fermeture à glissière (13) montée en périphérie, séparable, dont les parties (14, 15) sont fixées aux parties (6', 11') du cadre de serrage.

4. Agencement selon la revendication 2 ou 3, dans lequel aussi bien la lunette arrière (1) que la capote (2) dans la zone de son ouverture destinée à la vitre sont munies de bandes périphériques textiles (7', 10') au niveau de leurs côtés opposés au cadre de serrage (3'), qui se terminent à peu près en affleurement avec les parties du cadre de serrage (3').

5. Agencement selon la revendication 1, dans lequel aussi bien la lunette arrière (1) que la capote (2) dans la zone de son ouverture destinée à la vitre sont munies, au niveau de leurs côtés opposés à la fermeture rapide développée comme une fermeture à glissière imperméable, de bandes périphériques textiles (7, 10), qui au moment de l'installation de la lunette arrière (1) s'aboutent l'une à l'autre de manière à recouvrir cette fermeture à glissière.

6. Agencement selon la revendication 4 ou 5, dans lequel la bande périphérique (10, 10') de la capote (1) est façonnée d'une seule pièce à partir de la matière flexible constituant la capote par pliage de celle-ci.

7. Agencement selon la revendication 4 ou 5, dans lequel la liaison entre les parties de la fermeture rapide (3) et entre les bandes périphériques (7, 10) et la lunette arrière (1) ou bien la capote (2) est réalisée par un polyamide ou un polyester soudable à haute fréquence.

8. Agencement selon la revendication 6, par lequel les couches pliées de la bande périphérique (10, 10') sont fixées au moyen d'un polyamide ou d'un polyester soudable à haute fréquence.

9. Agencement selon la revendication 4 ou 5, par lequel la bande périphérique (7, 7') au niveau de la lunette arrière (1) est façonnée à partir d'une bande textile pliée en deux, les plis étant fixés au moyen d'un polyamide ou d'un polyester soudable à haute fréquence.
